# EUROPÄISCHE PATENTSCHRIFT

(11) **EP 2 174 751 B1**
(45) Veröffentlichungstag und Bekanntmachung des Hinweises auf die Patenterteilung: **23.07.2014**
(21) Anmeldenummer: 08017793.4
(22) Anmeldetag: 10.10.2008
(51) Int. Cl.: B24D 3/00, B24D 3/02, B24D 3/04, B24D 3/14, B24D 3/18, C04B 12/00, C09K 3/14

(54) **Schleifkornagglomerate, Verfahren zu ihrer Herstellung sowie ihre Verwendung zur Herstellung von Schleifmitteln**
Abrasive grain agglomerates, method for their manufacture and their application
Agglomérés de grains abrasifs, leur procédé de fabrication et leur utilisation pour la fabrication d'agents abrasifs

(43) Veröffentlichungstag der Anmeldung: 14.04.2010
(73) Patentinhaber: Center for Abrasives and Refractories Research & Development C.A.R.R.D. GmbH, 9524 Villach (AT)
(72) Erfinder: Gebhardt, Knuth, 9580 Drobollach (AT)
(74) Vertreter: Haseltine Lake LLP

(56) Entgegenhaltungen:
- EP-A- 0 494 638
- EP-A- 1 393 859
- EP-A- 2 050 805
- WO-A-01/08848
- WO-A-91/13840
- WO-A-2004/053013
- FR-A- 2 233 812
- US-A- 6 066 189
- US-A1- 2002 066 233

## Beschreibung

Die vorliegende Erfindung betrifft Schleifkornagglomerate auf Basis von Schleifkörnern aus der Gruppe der konventionellen Schleifkörner, wie z. B. Korund, Schmelzkorund, Sinterkorund, Zirkonkorund, Siliziumkarbid und Borcarbid sowie aus der Gruppe der Superabrasives, wie z. B. kubisches Bornitrid und Diamant, und/oder Gemische davon, wobei feinteilige Schleifkörner mit Hilfe eines anorganischen Binders zu festen Schleifkornagglomeraten verbunden sind.

Die vorliegende Erfindung betrifft auch ein Verfahren zur Herstellung derartiger Schleifkornagglomerate sowie ihre Verwendung in Schleifmitteln.

Schleifkornagglomerate sind in vielen Variationen seit langem bekannt und werden üblicherweise in gebundenen Schleifmitteln, wie z. B. Schleifscheiben, oder Schleifmitteln auf Unterlage, wie z. B. Schleifbändern, eingesetzt. Schleifkornagglomerate sind in der Regel aus einzelnen Schleifkörnern, den Primärteilchen, aufgebaut, die mittels eines Binders zu einem Schleifkornagglomerat zusammengelagert werden. Dazu werden als Bindemittel entweder organische oder anorganische Binder eingesetzt, wobei als organische Binder häufig Phenolharze Anwendung finden, während als anorganische Binder glasartige oder keramische Bindungsmaterialien eingesetzt werden.

Der große Vorteil von Schleifkornagglomeraten besteht darin, dass feinteilige Schleifkörner als Primärteilchen eingesetzt werden können, aus denen dann ein Agglomeratkorn gebildet wird, das im Vergleich zu einem Einzelkorn in vergleichbarer Größe einen vollkommen unterschiedlichen Verschleißmechanismus beim Schleifprozess zeigt.

Während ein Einzelkorn vergleichbarer Größe in der Regel je nach Druckverhältnissen beim Schleifprozess abstumpft oder zerstört wird, können die Schleifbedingungen bei Schleifkornagglomeraten gezielt so ausgewählt werden, dass einzelne (verschlissene) Körner aus dem Verbund herausbrechen, so dass immer wieder neue Schneidkanten gebildet werden und das Agglomeratkorn somit einerseits eine hohe Lebensdauer hat und andererseits einen kühlen Schliff und ein homogenes Schliffbild zeigt. Ein weiterer Vorteil der Schleifkornagglomerate besteht darin, dass auf diese Weise feinste Schleifkörner für Schleifprozesse und Schleifwerkzeuge eingesetzt werden können, für die sie sonst aufgrund ihrer geringen Korngröße nicht geeignet sind.

In der DE 103 92 532 B4 werden Schleifkornagglomerate beschrieben, die eine Vielzahl von Schleifkörnern umfassen, die mit einem Bindematerial zusammengehalten werden, wobei das Bindematerial eine Schmelztemperatur zwischen 500 °C und 1400 °C aufweist. In der DE 103 92 532 B4 wird auch ein Verfahren zur Herstellung derartiger Schleifkornagglomerate beschrieben, wobei die Schleifkörner mit einem Bindemittel vermischt werden und anschließend in einem Drehrohrofen in einem Temperaturbereich zwischen 145 °C und 1300 °C einer Wärmebehandlung unterzogen werden. Die so gewonnenen Schleifkornagglomerate besitzen eine Gesamtporosität zwischen 35 Vol.-% und 80 Vol.-%, wobei mindestens 30 Vol.-% der Poren miteinander verbunden sind. Bei diesem Herstellverfahren entstehen länglich geformte Agglomerate, die ein Längenverhältnis von Länge zu Querschnitt von mindestens 5:1 zeigen. Als Bindemittel werden glasartige Bindungsmaterialien, keramische Materialien, anorganische Bindemittel und Kombinationen davon eingesetzt. Die so gewonnenen Schleifkornagglomerate sollen vor allem in gebundenen Schleifmitteln eingesetzt werden, um den Prozentanteil und die Eigenschaften der Porosität im Schleifmittel zu kontrollieren und die Porosität in Form einer durchlässigen, miteinander verbundenen Porosität zu erhalten.

In der DE 10 2005 007 661 A1 werden Schleifkörper beschrieben, die aus mittels eines Binders stoffschlüssig miteinander verbundenen Schleifkörner gebildet sind und zumindest annähernd eine sphärische Außenkontur aufweisen, wobei die Schleifkörper eine Porosität von mindestens 35 Vol.-% aufweisen sollen. Diese Schleifkornagglomerate sind aus Einzelschleifkörnern gebildet, deren Partikelgröße im Bereich zwischen 0.05 µm und 10 µm liegt, die dann zu Agglomeraten mit einem Außendurchmesser im Bereich zwischen 10 µm und 150 µm zusammengefügt werden. In den Schleifwerkzeugen werden diese Agglomerate als eng klassierte, quasi konstante Körnungen, eingesetzt. Als Binder werden bevorzugt organische Binder verwendet, wie z. B. Phenolharze, Polyurethan, Epoxidharze, Harnstoffharze und Polyvinylbutyral. Gedacht sind die Agglomeratschleifkörner insbesondere für den Einsatz in Schleifmitteln auf Unterlage, wo sie für eine sehr feine schleifende Bearbeitung von Oberflächen von Werkstücken eingesetzt werden.

Die Herstellung von Schleifkornagglomeraten ist prinzipiell relativ unkompliziert und beruht meistens lediglich darauf, dass Einzelschleifkörner mit einem Bindemittel zusammengebracht, zu einem Schleifkornagglomerat geformt und anschließend thermisch behandelt werden. Je nach Art des verwendeten Bindemittels sind dabei sehr unterschiedliche Temperaturbedingungen einzuhalten.

Während bei den anorganischen Bindern in der Regel Temperaturen eingesetzt werden, die deutlich über 500 °C liegen, werden die Agglomerate mit organischen Bindern meist bei relativ geringen Temperaturen zwischen 200 °C und 300 °C ausgehärtet.

Die bekannten anorganischen Bindersysteme haben den Vorteil, dass mit ihnen sehr feste Bindungen erzeugt werden können, was jedoch immer relativ hohe Temperaturen erfordert, weshalb anorganische Bindemittelsysteme für temperaturempfindliche Schleifkörner, wie z. B. eutektischer Zirkonkorund, kubisches Bornitrid oder Diamant, nicht eingesetzt werden können.

Die organischen Bindemittel dagegen haben wiederum den Nachteil, dass die Bindung selber weniger fest ist. Darüber hinaus besteht beim Einsatz von organischen Bindern das Problem, dass die Mischungen aus Binder und feinsten Schleifkörnern zum Verkleben an den Rändern der Apparatur neigen. Dies führt insbesondere bei Produktwechseln zu einem hohen Reinigungsaufwand, da bei der Herstellung von Agglomeratschleifkörnern in der Regel gewährleistet sein muss, dass das Schleifkornagglomerat aus Schleifkörnern mit einer engen Korngrößenverteilung aufgebaut ist. Die Verunreinigung mit gröberen Körnern würde beispielsweise bei Schleifoperationen, bei denen die Feinstbearbeitung von Oberflächen von Werkstücken im Vordergrund steht, wie beispielsweise die Bearbeitung von dekorativen Lackschichten, zu beträchtlichen Problemen führen, da durch derartige Verunreinigungen mit groben Körnern Kratzer entstehen, die sich nachträglich, wenn überhaupt, nur noch mit einem ganz erheblichen Arbeitsaufwand wieder beseitigen lassen. Bei organischen Bindemitteln ist neben der Verunreinigung der Apparaturen auch noch die Umweltproblematik zu nennen, da die Verwendung von organischen Lösungsmitteln oder Bindern meist mit einer Geruchsbelästigung und Gesundheitsrisiken verbunden ist.

Es besteht somit weiterhin das Problem, ein Bindersystem für Schleifkornagglomerate zu finden, das die Nachteile des Standes der Technik nicht aufweist.

Gelöst wird diese Aufgabe durch Schleifkornagglomerate mit den Merkmalen des Anspruchs 1. Bevorzugte Ausführungsformen der erfindungsgemäßen Schleifkornagglomerate sind Gegenstände der entsprechenden Unteransprüche.

Aufgabe der Erfindung ist es auch, ein Verfahren zur Herstellung von Schleifkornagglomeraten zur Verfügung zu stellen. Diese Aufgabe wird gelöst durch ein Verfahren mit den Merkmalen des Anspruchs 15.

Bereits 1976 wurde in der Veröffentlichung J. Davidovits: "Solid phase synthesis of a mineral blockpolymer by low temperature polycondensation of aluminosilicate polymers". I.U.P.A.C. International Symposium on Macromolecules, Stockholm; Sept. 1976; Topic III, "New polymers of high stability" (1976) ein neuer Typ von keramischen Werkstoffen beschrieben, die später unter dem Begriff der Geopolymere bekannt wurden. Als Geopolymere wird eine Gruppe von aluminosilikatischen Werkstoffen bezeichnet, die ähnlich wie organische Polymere über einen Polykondensationsprozess hergestellt werden können, dabei aber rein anorganischer Natur sind und somit eine hohe thermische und chemische Stabilität aufweisen. Die Grundbausteine der Geopolymere bilden SiO₄- und AlO₄-Tetraeder, die bei der Geopolymerisation zu dreidimensionalen Netzen zusammenlagern.

In der EP 0 518 962 B1 werden Bindemittel auf Basis von Geopolymeren beschrieben, die neben den Silikat- und Aluminatgruppen mindestens ein komplexes Alkalifluorid umfassen, das die Härtungsgeschwindigkeit der Geopolymere herabsetzt und damit die Polykondensation steuert.

Als Binder für Schleifkornagglomerate sind Geopolymere bisher von den Fachleuten nicht in Betracht gezogen bzw. eingesetzt worden, da die Bildung von Geopolymeren hohe Feststoffkonzentration erfordert, wobei die Konzentration der Trockensubstanz oberhalb von 60 Gew.-% liegen muss, damit eine Polykondensation erfolgreich abläuft. Bei der Bildung von Schleifkornagglomeraten dagegen setzt man üblicherweise mit Wasser verdünnte Binder ein, um eine homogene Benetzung der Oberfläche der Schleifkörner zu erreichen und ein Agglomerieren der Schleifkörner unter Ausbildung von Bindungsbrücken zu ermöglichen, wobei eine feste Einbindung der Schleifkörner in eine Matrix vermieden werden soll. Üblicherweise werden dazu verdünnte industrielle Wassergläser oder kolloidale Kieselsäuren eingesetzt, deren Feststoffgehalt weit unter den für die Geopolymere geforderten 60 Gew.-% liegt. Überraschenderweise wurde nun gefunden, dass es mit Hilfe einer reaktives Al₂O₃ und SiO₂ (Aluminosilikat) enthaltenden und mit Wasser verdünnten Bindermischung gelingt, bei Temperaturen unter 450 °C äußerst feste und stabile Agglomerate zu erhalten.

Dies war um so überraschender, da bei dem erfindungsgemäßen Verhältnis von Al₂O₃ zu SiO₂, das bei 1:2 bis 1:20 liegt, üblicherweise keine festen und dichten Geopolymere ausgebildet werden, sondern sich reine viskose Silikatphasen bilden, die nicht an dem dreidimensionalen Netzwerk teilnehmen und sich beim Erwärmen in der Regel aufblähen und Blasen bilden, so dass bei Temperaturen über 300 °C normalerweise ein poröser Körper entsteht, von dem eine derart feste Bindung nicht zu erwarten gewesen wäre.

Als Ausgangsstoffe für das Aluminosilikat können Metakaoline, Flugaschen, Hüttenschlacken, Gesteinsstäube, Feinsande und aktivierte Tone eingesetzt werden. Diese Materialien sind äußerst feinteilig und besitzen eine ausreichende Aktivität, um durch Polykondensationsreaktionen der silikatischen und aluminosilikatischen Baugruppen aluminosilikatische Gele auszubilden.

Neben diesen Rohstoffen, die in großen Mengen als Neben- und Abfallprodukte der Energiegewinnung und aus der Grundstoffindustrie anfallen, können jedoch auch beliebig andere Materialien eingesetzt werden, die Aluminiumoxid und Siliziumoxid in ausreichender Menge und in ausreichend reaktiver Form enthalten, um die Polykondensationsreaktion einzuleiten und dreidimensionale Netzwerke aus SiO₄- und AlO₄-Tetraedern auszubilden. So hat es sich gezeigt, dass statt des Aluminiumsilikats auch reaktive Aluminiumoxide bzw. Aluminiumhydroxide zusammen mit SiO₂-reichen Wassergläsern eingesetzt werden können.

Neben dem Aluminosilikat, das in einem molaren Mengenverhältnis von Al₂O₃ zu SiO₂ von 1:2 bis 1:20 eingesetzt wird, enthält das Bindersystem Wasserglas, Wasser und in einer bevorzugten Ausführungsgestaltung mindestens ein komplexes Alkalifluorid. In einer weiteren bevorzugten Ausführungsform enthält das Bindersystem zusätzlich mindestens ein Phosphat, wobei in diesem Fall dann das dreidimensionale Netzwerk neben den SiO₄- und AlO₄-Tetraedern auch PO₄-Tetraeder enthält. Bezogen auf die Schleifkornprimärpartikel, werden dabei ca. 1 Gew.-% bis ca. 15 Gew.-% Binder eingesetzt, wobei sich der Binder zusammensetzt aus ca. 20 Gew.-% bis ca. 80 Gew.-% Wasserglas, ca. 20 Gew.-% bis ca. 60 Gew.-% Wasser und ca. 1 Gew.-% bis ca. 25 Gew.% Aluminosilikat, bezogen auf das Gesamtgewicht des Binders.

Das vorteilhaft zusätzlich eingesetzte komplexe Alkalifluorid ist ausgewählt aus der Gruppe Na₃AlF₆, K₂NaAlF₆, K₂SiF₆, NaBF₄ und KBF₄. Dabei beträgt der Gewichtsanteil an komplexem Alkalifluorid vorteilhaft ca. 1 Gew.-% bis ca. 15 Gew.-%, bezogen auf das Gesamtgewicht des Binders.

Zusätzlich kann die Bindermischung anorganische Phosphate enthalten, die vorteilhaft ebenfalls im Bereich zwischen 20 Gew.- % und 60 Gew.-%, bezogen auf das Gesamtgewicht des Binders, dem Binder zugegeben werden. Dabei werden die Phosphatanionen als PO₄-Tetraeder in dreidimensionalen Aluminosilikatgitter eingebaut.

Neben den oben aufgeführten Bestandteilen kann der Binder zusätzlich Füllstoffe und/oder Schleifhilfsmittel umfassen. Zu diesem Zweck können sämtliche bekannten Füllstoffe und Schleifhilfsmittel aus der Gruppe der Sulfide, Phosphate, Carbonate und/oder Halogenide und/oder sulfid-, phosphat-, carbonat- und/oder halogenidhaltige Komplexverbindungen aus der Gruppe der Elemente Natrium, Silizium, Kalium, Magnesium, Calcium, Aluminium, Mangan, Kupfer, Zink, Eisen, Titan, Antimon und/oder Zinn eingesetzt werden.

Der besondere Vorteil des oben beschriebenen Binders besteht darin, dass er bei einer Temperatur von unterhalb von 450 °C aushärtbar ist und dennoch eine den bekannten anorganischen Binder vergleichbare Festigkeit aufweist.

Die erfindungsgemäßen Schleifkornagglomerate besitzen einen mittleren Durchmesser zwischen 0.05 mm und 3 mm, wobei die mittlere Korngröße der Primärpartikel zwischen 30 µm und 200 µm liegt.

Die Herstellung der Schleifkornagglomerate ist relativ unkompliziert, wobei die Schleifkornprimärpartikel mit einer mittleren Korngröße zwischen 30 µm und 200 µm zunächst mit einem Binder vermischt werden, wobei sich die Primärpartikel unter ständigem Mischen zu Schleifkornagglomeraten zusammenlagern. Durch Variation der Schleifkorngröße, der Mischgeschwindigkeit, der Bindermenge und der Mischzeit kann die Agglomeratgröße über einen weiten Bereich beeinflusst werden. Es können jedoch auch alternativ die Einzelkomponenten der Bindermischung nacheinander zu der Schleifkörnung gegeben werden, so dass beispielsweise zunächst das Aluminosilikat mit den Schleifkörnern vermischt wird und anschließend das Wasserglas zugegeben wird.

Die so erhaltenen Schleifkornagglomeratgrünkörper werden anschließend bei einer Temperatur zwischen 100 °C und 150 °C getrocknet und dann werden die getrockneten Schleifkornagglomerate bei einer Temperatur zwischen ca. 200 °C bis ca. 400 °C ausgehärtet.

Die erfindungsgemäßen Schleifkornagglomerate besitzen eine Porosität von ca. 10 Vol.-% bis ca. 50 Vol.-%. Dabei weisen die erfindungsgemäßen Schleifkornagglomerate eine außerordentlich hohe Kornbruchfestigkeit auf, die, gemessen nach Vollstädt, üblicherweise zwischen 10 und 60 Newton liegt.

Die Messung der Bruchfestigkeit wurde mit einem Testgerät durchgeführt, das für Festigkeitsuntersuchungen von Diamanten entwickelt wurde (Vollstädt, Diatest SI). Bei diesem Verfahren wird das Schleifkorn in einer Stempelzelle zerdrückt und es wird die Maximalkraft (Compressive Fracture Force = CFF) aufgezeichnet, bei der das Korn zerspringt. Der Drucksensor wird dazu für den Messbereich von 0 bis 200 Newton angepasst. Zur Vorbereitung der Proben wurde eine Fraktion im Bereich zwischen 850 µm und 710 µm (= 20 mesh bis 24 mesh) ausgesiebt, die dann weiter über einen Rütteltisch in Bezug auf die Kornform sortiert wurde. Von den dabei erhaltenen Messfraktionen wurden jeweils 150 bis 200 Einzelmessungen durchgeführt, so dass sich statistisch hinreichend abgesicherte Werte für die mittleren Kornfestigkeiten ergeben.

Im Folgenden wird die vorliegende Erfindung anhand von Beispielen ausführlich erläutert.

### Beispiel 1 (Musterherstellung)

Es wurden jeweils 3 kg Schleifkorn mit 300 g Schmelzkorund (Mikrokorn d₅₀ = 10 µm, 25 g Kaliumhexafluorosilikat (K₂SiF₆), 25 g Metakaolin (Opacilite ex Imerys) in einem Intensivmischer (Typ R01, Eirich) fünf Minuten im Gegenstrom gemischt. Zur Granulatherstellung wurde dann ein Teil der Mischung auf einen rotierenden Pelletierteller (Typ TR04, Eirich) vorgelegt und mit 40%iger, verdünnter Wasserglaslösung besprüht. Es wurde nun sukzessive Kornmischung mit Wasserglas zugegeben, während die sich dabei bildenden Granulate aufgrund der Schwerkraft an der Seite des Granuliertellers aufgefangen werden konnten. Insgesamt wurden dabei 500 g Kaliwasserglas (42/43 Mörsil H, Cognis) zugegeben. Von den so erhaltenen Granulaten wurde eine Fraktion im Bereich zwischen 1180 µm und 850 µm ausgesiebt und anschließend bei 100 °C eine Stunde getrocknet und dann in einem Drehrohrofen bei 350 °C geglüht. Als Schleifkorn wurde Zirkonkorund (ZK40, Treibacher Schleifmittel) in der Körnung P120 (Versuch 1), als Kornmischung P100/P150 im Verhältnis 1:3 (Versuch 2), als Kornmischung P120/P180 im Verhältnis 1:2 (Versuch 3) und als Kornmischung P120/P220 im Verhältnis 1:2 (Versuch 4) eingesetzt. Daneben wurde auch ein Normalkorund in der Körnung P320 (Versuch 5) eingesetzt. Die gemessenen Bruchfestigkeiten nach Vollstädt sind in der folgenden Tabelle 1 zusammengefasst.

**Tabelle 1**

| Versuch Nr. | Primärkörner (Korntyp / Körnungen / Mischungsver-hältnis | mittlere Korngröße (µm) | Agglomeratgröße (µm) | Porosität (%) | CFF (N) |
|---|---|---|---|---|---|
| 1 | ZK40 P120 | 120 | ca. 800 | ca. 40 | 20.4 |
| 2 | ZK40 P100/P150 (1:3) | 150/100 | ca. 800 | ca. 30 | 25.3 |
| 3 | ZK40 P120/P180 (1:2) | 120/80 | ca. 800 | ca. 20 | 30.7 |
| 4 | ZK40 P120/P220 (1:2) | 120/65 | ca. 800 | ca. 20 | 36.9 |
| 5 | FRPL P320 | 45 | ca. 800 | ca. 15 | 41.5 |

Aus den in der Tabelle 1 aufgeführten CFF-Werten ist zu erkennen, dass die Agglomerate bei einer vorgegebenen Porosität im Bereich zwischen ca. 10 Vol.-% und ca. 40 Vol.-% eine außerordentlich hohe Bruchfestigkeit erreichen. Dabei kann die Festigkeit der Agglomerate beim Einsatz von relativ groben Körnungen offensichtlich dadurch gesteigert werden, dass keine reinen Körnungen sondern Korngemische eingesetzt werden, wobei durch den Zusatz von Feinkörnungen die Anzahl der Bindungsbrücken erhöht wird und der gesamte Zusammenhalt des Schleifkornagglomerates verfestigt wird. In den oben beschriebenen Beispielen werden hohe Bruchfestigkeiten erst mit einer bimodalen Kornverteilung erreicht, da relativ grobe Primärkörner für ein Schleifkornagglomerat mit einem im Vergleich dazu relativ geringem Durchmesser eingesetzt werden, so dass eine zusätzliche Feinfraktion erforderlich ist, um ausreichend viele Bindungsbrücken auszubilden und damit dem Agglomerat eine genügende Festigkeit zu vermitteln.

Dabei muss als Feinfraktion nicht notwendigerweise der gleiche Schleifkorntyp eingesetzt werden, der auch als Primärkorn eingesetzt wird, sondern es kann jeder der als Primärkorn in Frage kommenden Schleifkorntypen aus der Gruppe Korund, Schmelzkorund, Sinterkorund, Zirkonkorund, Siliziumcarbid, Borcarbid, kubisches Bornitrid oder Diamant eingesetzt werden, wobei es sich insbesondere bei der Verwendung von teuren Primärkörnern aus ökonomischen Gründen anbietet preiswertere Schleifkörner, wie z.B. Korund oder Schmelzkorund, als Feinfraktion einzusetzen. Die mittlere Korngröße der Feinfraktion liegt im Bereich von ca. 0.5 µm bis ca. 30 µm.

Dies kann allerdings nicht verallgemeinert werden, wie das Beispiel Nr. 5 zeigt, in dem eine unimodale Kornverteilung mit einem äußerst feinen Korn (P320) eingesetzt wurde.

Generell ist die Bruchfestigkeit der Agglomerate vom Agglomeratdurchmesser und der Korngröße der Primärkornteilchen abhängig. Es kann festgehalten werden, dass es vor allem vom Einsatzzweck abhängt, welche Korngrößen und Kornverteilungen für das Primärkorn ausgewählt werden. So können insbesondere bei der Verwendung von feineren Körnungen als Primärkörner hohe Bruchfestigkeiten auch mit unimodalen Kornverteilungen erreicht werden.

Bei den oben beschriebenen Beispielen wurden relativ große Agglomerate hergestellt und vermessen. Allgemein ist festzustellen, dass mit kleiner werdender Agglomeratgröße die Kornbruchfestigkeit ansteigt, wobei einschränkend vorausgesetzt werden muss, dass dies nur gilt, wenn Primärkorngröße und Agglomeratgröße aufeinander abgestimmt sind.

### Beispiel 2 (Muster mit Phosphatanteil)

Es wurden 3.6 kg Schleifkorn (ZK40, Treibacher Schleifmittel, P120/P220, 1:2) mit 400 g Schmelzkorund (Mikrokorn d₅₀ = 10 µm), 5 g Calciumcarbonat, 5 g Magnesiumcarbonat und 25 g Metakaolin (Opacilite, Imerys) in einem Intensivmischer (Typ R01, Eirich) fünf Minuten im Gegenstrom gemischt. Zur Granulatherstellung wurde dann ein Teil der Mischung auf einen rotierenden Pelletierteller (Typ TR04, Eirich) vorgelegt und abwechselnd mit einer Mischung aus einer 40%igen, verdünnten Wasserglaslösung (42/43 Mörsil H, Cognis) und einer Aluminiumphosphatlösung (FFB 705, Budenheim) im Verhältnis 1:1 besprüht. Es wurde dann sukzessive Kornmischung und Wasserglas- bzw. Aluminiumphosphat-Mischung zugegeben, während die sich dabei bildenden Granulate aufgrund der Schwerkraft an der Seite des Granuliertellers aufgefangen werden konnten. Insgesamt wurde von den so erhaltenen Granulaten eine Fraktion im Bereich zwischen 1180 µm und 850 µm ausgesiebt und anschließend bei 100 °C eine Stunde getrocknet und dann in einem Drehrohrofen bei 350 °C geglüht.

Bei dem so gewonnenen Schleifkornagglomerat mit einer mittleren Agglomeratgröße von ca. 950 µm wurde bei einer Porosität von ca. 20 Vol.-% eine Kornbruchfestigkeit nach Vollstädt von 45.8 N gemessen.

### Beispiel 3 (Schleiftest)

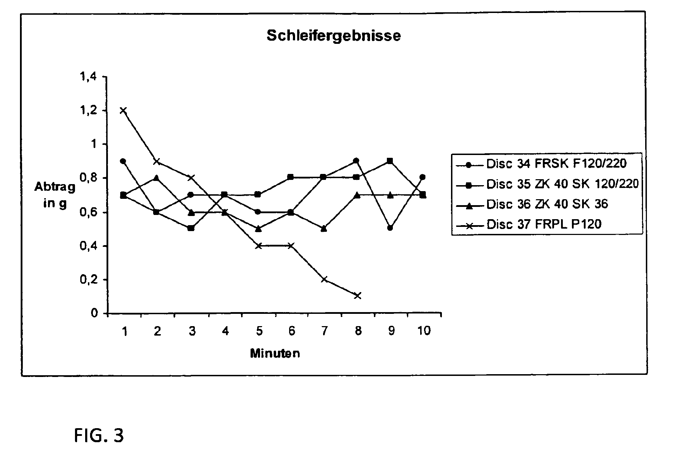

Für den Schleiftest wurden aus Normalkorund- und Zirkonkorundkörnungen, die analog zum Beispiel 1 zu Schleifkornagglomeraten verarbeitet wurden, Vulkanfiberscheiben mit einem Durchmesser von 150 mm hergestellt, wobei die Granulatkörner ohne zusätzliche schleifaktive Füllstoffe auf die mit Harz bestrichene Fiberscheibe gestreut wurden. Getestet wurden die Fiberscheiben gegen einen Rundstab aus Chrom-Nickel-Edelstahl (42 CrMoS4V) mit einem Durchmesser von 20 mm, bei einer Drehzahl von 3000 Umdrehungen pro Minute und einer Anpresskraft von 9.5 Newton pro cm². Geschliffen wurde in Intervallen von jeweils 2 Minuten. Zum Vergleich wurde Zirkonkorund (ZK40, Treibacher Schleifmittel) in einer groben Körnung (P36) eingesetzt. Die Ergebnisse der Schleiftests sind in der Tabelle 2 sowie graphisch in der Figur 3 dargestellt.

**Tabelle 2**

| Versuch Nr. | Schleif-korntyp | Primärkörner / Mischungs-verhältnis | Agglomeratgröße (µm) | Abtrag (g) | Schleifleistung (%) |
|---|---|---|---|---|---|
| 6 (Disc34) | FRSK | F120/F220 (1:1) | ca. 500 | 7.1 | 111 |
| 7 (Disc35) | ZK40 | F120/F220 (1:1) | ca. 500 | 7.2 | 113 |
| 8 (Disc36) | ZK40 | F36 | ca. 500 (Einzelkorn) | 6.4 | 100 |
| 9 (Disc37) | FRPL | P120 | ca. 500 | 4.6 | 72 |

Aus den Ergebnissen in der Tabelle 2 ist zu erkennen, dass die Schleifkornagglomerate eine mit einem kompakten Schleifkorn vergleichbare Abtragsleistung zeigen, wenn zur Agglomeratbildung Schleifkornmischungen eingesetzt werden. Beim Einsatz einer reinen, groben Schleifkörnung zur Fertigung eines Schleifkornagglomerats reicht offensichtlich die Stabilität des Agglomerats anschließend nicht aus, um über einen längeren Zeitraum eine konstante Abtragsleistung zu zeigen. Dies wird insbesondere auch bei der graphischen Darstellung der Testergebnisse im Kontext mit den mikroskopischen Aufnahmen der Agglomerate deutlich, wobei wiederum darauf hingewiesen werden muss, dass dies nicht generell der Fall ist, sondern abhängig ist von Korngröße der Primärkörner und der Größe der daraus gebildeten Agglomerate.

Die Erfindung wird zusätzlich anhand von Zeichnungen erläutert. Dabei zeigen:
- Figur 1: eine rasterelektronenmikroskopische Schliffaufnahme eines Agglomeratkorns in 100-facher Vergrößerung,
- Figur 2: eine rasterelektronenmikroskopische Aufnahme eines Schliffbildes eines Ausschnitts aus einem Agglomeratkorn in 3.500-facher Vergrößerung und
- Figur 3: eine graphische Darstellung des Schleiftests aus Beispiel 2.

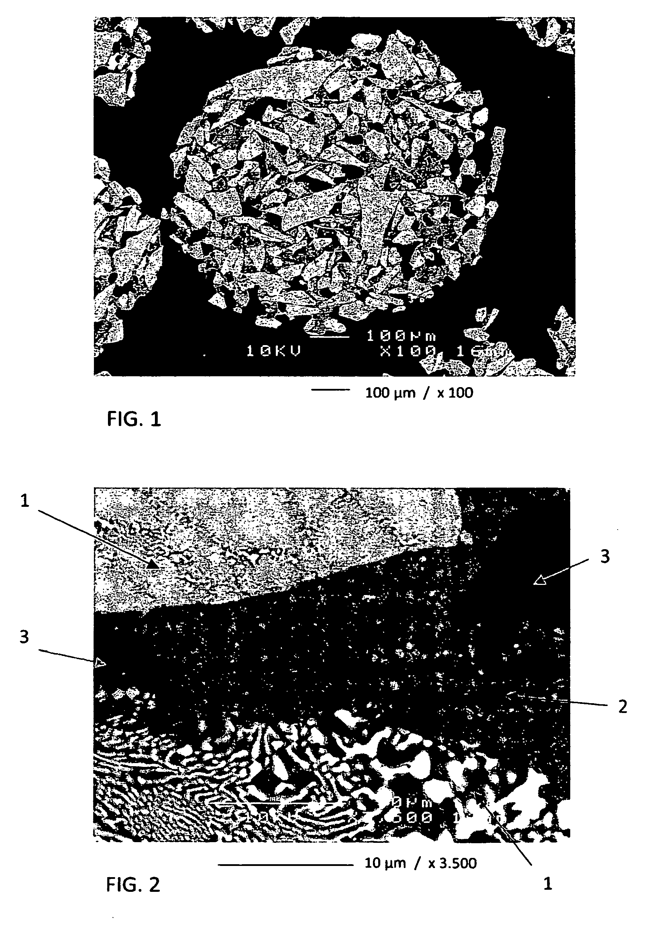

Die Figur 1 zeigt eine rasterelektronenmikroskopische Aufnahme eines erfindungsgemäßen Granulatkorns in 100-facher Vergrößerung, wobei als Primärkörner Schleifkörner auf Basis von Zirkonkorund in den Körnungen P120 und P220 im Verhältnis 1:2 eingesetzt wurden. Dabei sind die Schleifkörner als helle Bereiche, die Bindungsbrücken als graue Bereiche zwischen den hellen Schleifkörnern und die Poren als dunkle Bereiche zu erkennen. Das Schleifkornagglomerat besitzt eine hohe Porosität und die einzelnen Schleifkörner sind über relativ schmale Bindungsbrücken oder -stege miteinander verbunden, wobei das gesamte Agglomerat einen relativ lockeren Eindruck erweckt. Umso erstaunlicher sind die hohen Kornfestigkeitswerte, die an derartigen Schleifkornagglomeraten gemessen wurden und die enorm hohe Bindungskraft des aluminosilikathaltigen Binders widerspiegeln. Das Schleifkornagglomerat selber hat im vorliegenden Fall einen Durchmesser von ca. 850 µm.

Bei dieser Darstellung wird sehr gut deutlich, dass bei der gewählten Korngröße der Primärteilchen und der daraus verwirklichten Agglomeratgröße eine bimodale Kornverteilung zumindest in Bezug auf die Bruchfestigkeit vorteilhaft sein sollte, da auf diese Weise ein wesentlich kompakteres Schleifkornagglomerat realisiert werden kann (siehe Figur 1) als es bei der gleichen Agglomeratgröße unter Verwendung von ausschließlich groben Primärkörnern möglich wäre.

In der Figur 2 ist in einer elektronenmikroskopischen Aufnahme ein Ausschnitt aus einem Anschliff eines Agglomeratkorns in 3.500-facher Vergrößerung zu sehen. Hier ist als grauer Bereich eine Bindungsbrücke 2 zwischen zwei helleren Bereichen zu sehen, die die Zirkonkorund-Schleifkörner 1 wiedergeben. Die Bindungsbrücke 2 selber lässt eine Strukturierung erkennen, die darauf zurückzuführen ist, dass die Bindungsbrücke 2 neben dem Bindungsmittel einen hohen Anteil an Mikroschleifkörner mit einem mittleren Durchmesser von ca. 10 µm als Füllstoff aufweist, wodurch die gesamte Bindungsbrücke 2 gefestigt wird.

Die unterschiedliche Strukturierung der Schleifkörner 1 ist darauf zurückzuführen, dass beim Zirkonkorund-Schleifkorn 1 im oberen Bildbereich eine äußerst homogene Verteilung von Zirkonoxid und Aluminiumoxid vorliegt, während beim Zirkonkorund-Schleifkorn 1 im unteren Bildbereich ein inhomogenes Gefüge mit Al₂O₃-Ausseigerungen zu erkennen ist. Rechts und links von der Bindungsbrücke 2 sind jeweils Poren 3 als dunkle Bereiche zu erkennen.

Die Figur 3 ist eine graphische Wiedergabe des Schleiftests aus Beispiel 3. Dabei wird sehr gut verdeutlicht, dass die Schleifkornagglomerate eine mit einem kompakten Schleifkorn vergleichbare Abtragsleistung zeigen, wobei die Festigkeit der Schleifkornagglomerate jedoch wesentlich von der Kornzusammensetzung bzw. der Korngröße abhängt. So zeigt das Schleifkornagglomerat aus einem reinen, relativ groben Schmelzkorundprimärkorn P120 (Nr. 9) zwar zu Beginn der Schleifoperation eine hohe Schleifleistung, bricht jedoch dann nach einigen wenigen Schleifzyklen relativ schnell zusammen. Dies dürfte jedoch nicht auf die mangelnde Bindungsstärke selber zurückzuführen sein, sondern allein auf die Größe des Schleifkorns und die dadurch ungünstige statische Anordnung im Schleifkornagglomerat. Dies wird insbesondere auch bei der Betrachtung der Figur 1 deutlich, wo zu erkennen ist, dass erst durch die Verwendung unterschiedlicher Körnungen und vor allem durch den Zusatz einer zusätzlichen feinen Kornfraktion ein relativ kompaktes Agglomeratkorn entsteht. Deutlich wird dies auch aus den Ergebnissen der Schleiftests der weiteren Muster mit Schleifkornmischungen, die sämtliche eine mit einem groben Schleifkorn vergleichbare Abtragsleistung zeigen.

Bei dem in dem Diagramm wiedergegebenen Schleiftest wurden neben Zirkonkorund auch Normalkorund als Schleifkornagglomerat im Vergleich zu einem kompakten Zirkonkorund getestet. Von besonderem Interesse ist dabei, dass das Schleifkornagglomerat aus Normalkorund zumindest bei den ersten Schleifzyklen eine dem Zirkonkorund-Kompaktkorn sowie dem Zirkonkorund-Schleifkornagglomerat vergleichbare bzw. sogar höhere Abtragsleistung zeigt. Dies ist deswegen von besonderem Interesse, da üblicherweise ein Normalkorundkorn eine deutlich schwächere Abtragungsleistung aufweist als ein Zirkonkorundkorn, das aufgrund seines Selbstschärfmechanismus immer wieder neue Schneidkanten bildet und dadurch eine dementsprechend hohe Abtragsleistung generiert, während ein Normalkorundkorn nach wenigen Eingriffen abstumpft oder zusammenbricht. Offensichtlich ist bei dem Agglomeratkorn nun ein ähnlicher Selbstschärfmechanismus festzustellen, wobei die Bindungen zwischen den einzelnen Primärkörnern stark genug sind, um einen Zusammenbruch des gesamten Agglomerats zu verhindern.

In den oben aufgeführten Beispielen und Figuren sind auszugsweise lediglich einige wenige Ausgestaltungen und entsprechende Tests der erfindungsgemäßen Schleifkornagglomerate wiedergegeben, ohne dass darin irgendeine Einschränkung zu sehen ist. Mit Hilfe dieser Beispiele sollte in erster Linie die außerordentliche Festigkeit der bei ungewöhnlich tiefen Temperaturen gesinterten glasartigen erfindungsgemäßen Bindung und die daraus resultierende hervorragende Schleifleistung der mit Hilfe dieser Bindung hergestellten Schleifkornagglomerate demonstriert werden.

Neben dem mit einem kompakten Schleifkorn entsprechender Größe vergleichbaren Materialabtrag ist bei dem erfindungsgemäßen Schleifkornagglomerat die dabei auftretende geringe Rautiefe hervorzuheben, die die Schleifkornagglomerate für Schleifoperationen prädestiniert, bei denen hohe Abtragsleistungen und hohe Oberflächengüte in einem Arbeitsgang gefordert werden.

Generell können die erfindungsgemäßen Schleifkornagglomerate vorteilhaft zur Herstellung von Schleifmitteln auf Unterlage, wie z.B. Schleifbändern oder Schleifpapieren, oder zur Herstellung von gebundenen Schleifmitteln, wie z.B. porösen Schleifscheiben, eingesetzt werden.

### Bezugszeichenliste

- 1: Schleifkorn (Zirkonkorund)
- 2: Bindungsbrücke
- 3: Pore

## Patentansprüche

1. Schleifkornagglomerate, aufgebaut aus einer Vielzahl von Schleifkörnern, wobei die Schleifkörner ausgewählt sind aus der Gruppe Korund, Schmelzkorund, Sinterkorund, Zirkonkorund, Siliziumcarbid, Borcarbid, kubisches Bornitrid, Diamant und/oder Gemischen davon und mit einem anorganischen Binder miteinander verbunden sind,
**dadurch gekennzeichnet, dass**
die Basis für den Binder
- ein Aluminosilikat,
- Wasserglas und
- Wasser umfasst, wobei sich der Binder zusammensetzt aus ca. 20 bis ca. 80 Gew.-% Wasserglas, ca. 20 bis ca. 80 Gew.-% Wasser und ca. 1 bis ca. 25 Gew.-% Aluminosilikat, jeweils bezogen auf das Gesamtgewicht des Binders,
wobei das molare Mengenverhältnis von Al₂O₃ zu SiO₂ im Binder von ca. 1:2 bis ca. 1:20 beträgt, wobei der Binder bei einer Temperatur von ≤ 450 °C, aushärtbar ist.

2. Schleifkornagglomerate nach Anspruch 1,
**dadurch gekennzeichnet, dass**
der Binder zusätzlich mindestens ein komplexes Alkalifluorid, ausgewählt aus der Gruppe Na₃AlF₆, K₂NaAlF₆, Na₂SiF₆, K₂SiF₆, NaBF₄ und KBF₄, umfasst, wobei der Gewichtsanteil des Alkalifluorids ca. 1 Gew.-% bis ca. 15 Gew.-%, bezogen auf das Gesamtgewicht des Binders, beträgt.

3. Schleifkornagglomerate nach Anspruch 1,
**dadurch gekennzeichnet, dass**
der Binder zusätzlich ein Phosphat mit einem Gewichtsanteil von ca. 20 Gew.-% bis ca. 60 Gew.-%, bezogen auf das Gesamtgewicht des Binders, umfasst.

4. Schleifkornagglomerate nach einem der Ansprüche 1 bis 3,
**dadurch gekennzeichnet, dass**
der Anteil des Binders ca. 1 bis ca. 15 Gew.-%, bezogen auf die miteinander verbundenen Schleifkörner, beträgt.

5. Schleifkornagglomerate nach einem der Ansprüche 1 bis 4,
**dadurch gekennzeichnet, dass**
der Binder bei einer Temperatur zwischen 200 °C und 400 °C aushärtbar ist.

6. Schleifkornagglomerate nach einem der Ansprüche 1 bis 5,
**dadurch gekennzeichnet, dass**
das Aluminosilikat ausgewählt ist aus der Gruppe Metakaoline, Flugaschen, Hüttenschlacken, Feinsande und aktive Tone.

7. Schleifkornagglomerate nach einem der Ansprüche 1 bis 6,
**dadurch gekennzeichnet, dass**
das Aluminosilikat ein durch Polykondensation aus reaktivem Al₂O₃ und SiO₂ entstandenes dreidimensionales Netzwerk aus SiO₄- und AlO₄-Tetraedern ist.

8. Schleifkornagglomerate nach einem der Ansprüche 3 bis 7,
**dadurch gekennzeichnet, dass**
das dreidimensionale Netzwerk zusätzlich PO₄-Tetraeder aufweist.

9. Schleifkornagglomerate nach einem der Ansprüche 1 bis 8,
**dadurch gekennzeichnet, dass**
der Binder zusätzlich Füllstoffe und/oder Schleifhilfsmittel umfasst, ausgewählt aus der Gruppe der Sulfide, Phosphate, Carbonate und/oder Halogenide und/oder sulfid-, phosphat-, carbonat- und/oder halogenidhaltigen Komplexverbindungen aus der Gruppe der Elemente Na, Li, K, Mg, Ca, Al, Mn, Cu, Sn, Fe, Ti, Sb und/oder Zn.

10. Schleifkornagglomerate nach einem der Ansprüche 1 bis 9,
**dadurch gekennzeichnet, dass**
der Binder einen Anteil von ca. 2 Gew.-% bis ca. 15 Gew.-% Feinkorn ausgewählt aus der Gruppe Korund, Schmelzkorund, Sinterkorund, Zirkonkorund, Siliziumcarbid, Borcarbid, kubisches Bornitrid, Diamant und/oder Mischungen davon als Füllstoff aufweist, wobei das Feinkorn eine mittlere Korngröße zwischen ca. 0,5 µm und ca. 30 µm aufweist.

11. Schleifkornagglomerate nach einem der Ansprüche 1 bis 10,
**dadurch gekennzeichnet, dass**
die Primärschleifkörner eine bimodale Kornverteilung aufweisen, wobei der prozentuale Unterschied zwischen den mittleren Korngrößen der beiden Kornverteilungsmaxima zwischen ca. 30 % und ca. 70 % liegt.

12. Schleifkornagglomerate nach einem der Ansprüche 1 bis 11,
**dadurch gekennzeichnet, dass**
die mittlere Korngröße der Primärpartikel zwischen 30 µm und 200 µm und der mittlere Durchmesser der Schleifkornagglomerate zwischen 0.05 mm bis 3 mm beträgt.

13. Schleifkornagglomerate nach einem der Ansprüche 1 bis 12,
**dadurch gekennzeichnet, dass**
die Porosität der Schleifkornagglomerate ca. 10 Vol-% bis ca. 50 Vol.- % beträgt.

14. Schleifkornagglomerate nach einem der Ansprüche 1 bis 13,
**dadurch gekennzeichnet, dass**
die Schleifkornagglomerate eine Kornbruchfestigkeit (CFF) nach Vollstädt von mindestens 10 N, vorzugsweise mindestens 40 N aufweisen.

15. Verfahren zur Herstellung von Schleifkornagglomeraten, aufgebaut aus einer Vielzahl mittels eines anorganischen Binders miteinander verbundenen Schleifkörnern, wobei die Schleifkörner ausgewählt sind aus der Gruppe Korund, Schmelzkorund, Sinterkorund, Zirkonkorund, Siliziumcarbid, Borcarbid, kubisches Bornitrid, Diamant und/oder Gemische davon, umfassend die Schritte
- Vermischen der Schleifkörner mit einem Binder;
- Trocknen der so erhaltenen Schleifkornagglomerat-Grünkörper bei einer Temperatur zwischen 100 °C und 150 °C; und
- Aushärten der getrockneten Schleifkornagglomerate bei einer Temperatur von ca. 200 °C bis ca. 450 °C,
**dadurch gekennzeichnet, dass** als Binder
- ein Aluminosilikat,
- Wasserglas und
- Wasser
eingesetzt wird, wobei das molare Mengenverhältnis von Al₂O₃ zu SiO₂ im Binder von ca. 1:2 bis ca. 1:20 beträgt, wobei sich der Binder zusammensetzt aus ca. 20 bis ca. 80 Gew.-% Wasserglas, ca. 20 bis 80 Gew.-% Wasser und ca. 1 bis ca. 25 Gew.-% Aluminosilikat, jeweils bezogen auf das Gesamtgewicht des Binders.

16. Verfahren nach Anspruch 15,
**dadurch gekennzeichnet, dass**
der Binder zusätzlich ein komplexes Alkalifluorid und/oder ein Phosphat umfasst.

17. Verwendung von Schleifkornagglomeraten nach einem der Ansprüche 1 bis 14 zur Herstellung von Schleifmitteln auf Unterlage und gebundenen Schleifmitteln.

## Claims

1. Abrasive grain agglomerates composed of a plurality of abrasive grains, wherein the abrasive grains are selected from the group corundum, fused corundum, sintered corundum, zirconium corundum, silicon carbide, boron carbide, cubic boron nitride, diamond and/or mixtures thereof, bonded together with an inorganic binder,
**characterized in that**
the basis for the binder comprises
- an aluminosilicate
- water glass and
- water, wherein the binder is composed of about 20 to about 80% by weight of water glass, about 20 to about 80% by weight water and about 1 to about 25% by weight aluminosilicate, each relative to the total weight of the binder
wherein the molar ratio of Al₂O₃ to SiO₂ in the binder is from about 1:2 to about 1:20, wherein the binder is hardenable at a temperature of ≤ 450°C.

2. Abrasive grain agglomerates according to claim 1,
**characterised in that**
the binder comprises in addition a complex alkali fluoride, selected from the group of Na₃AlF₆, K₂NaAlF₆, Na₂SiF₆, K₂SiF₆, NaBF₄ and KBF₄, wherein the weight portion of the alkali fluoride is about 1% by weight to about 15% by weight relative to the total weight of the binder.

3. Abrasive grain agglomerates according to claim 1,
**characterised in that**
the binder comprises in addition a phosphate with a weight portion of about 20% by weight to about 60% by weight relative to the total weight of the binder.

4. Abrasive grain agglomerates according to one of claims 1 to 3,
**characterised in that**
the portion of the binder is about 1 to about 15% by weight relative to the abrasive grains bonded to each other.

5. Abrasive grain agglomerates according to one of claims 1 to 4,
**characterised in that**
the binder is hardenable at a temperature between 200°C and 400°C.

6. Abrasive grain agglomerates according to one of claims 1 to 5,
**characterised in that**
the aluminosilicate is selected from the group metakaolin, flue ash, smelting slag, fine sands and activated clays.

7. Abrasive grain agglomerates according to one of claims 1 to 6,
**characterised in that**
the aluminosilicate is a three-dimensional network of SiO₄- and AlO₄-tetraheders generated through polycondensation from reactive Al₂O₃ and SiO₂.

8. Abrasive grain agglomerates according to one of claims 3 to 7,
**characterised in that**
the three-dimensional network in addition includes PO₄-tetraheders.

9. Abrasive grain agglomerates according to one of claims 1 to 8,
**characterised in that**
the binder comprises in addition filler materials and/or auxiliary abrasive agents selected from the group of sulfides, phosphates, carbonates and/or halide containing complex compounds from the group of elements Na, Li, K, Mg, Ca, Al, Mn, Cu, Sn, Fe, Ti, Sb and/or Zn.

10. Abrasive grain agglomerates according to one of claims 1 to 9,
**characterised in that**
the binder includes a portion of about 2% by weight to about 15% by weight fine grain selected from the group of corundum, fused corundum, sintered corundum, zirconium corundum, silicon carbide, boron carbide, cubic boron nitride and diamond and/or mixtures thereof as a filler material, wherein the fine grain has a mean grain size between about 0.5 µm and about 30 µm.

11. Abrasive grain agglomerates according to one of claims 1 to 10,
**characterised in that**
the primary abrasive grains have a bimodal grain distribution, wherein the difference in percent between the main grain sizes of the grain distribution maxima is between about 30% and about 70%.

12. Abrasive grain agglomerates according to one of claims 1 to 11,
**characterised in that**
the mean grain size of the primary particles is between 30 µm and 200 µm and the mean diameter of the abrasive grain agglomerates is between 0.05 mm and 3 mm.

13. Abrasive grain agglomerates according to one of claims 1 to 12,
**characterised in that**
the porosity of the abrasive grain agglomerates is about 10% by volume to about 50 % by volume.

14. Abrasive grain agglomerates according to one of claims 1 to 13,
**characterised in that**
the abrasive grain agglomerates have a fracture resistance (CFF) according to Vollstädt of at least 10 N, preferably at least 40 N.

15. Method for the production of abrasive grain agglomerates composed of a plurality of abrasive grains bonded to each other by inorganic binders, wherein the abrasive grains are selected from the group of corundum, fused corundum, sintered corundum, zirconium corundum, silicon carbide, boron carbide, cubic boron nitride and diamond and/or mixtures thereof; comprising the steps of:
- mixing the abrasive grains with a binder;
- drying the so obtained abrasive grain agglomerate green bodies at a temperature between 100°C and 150°C; and
- hardening the dried abrasive grain agglomerates at a temperature of about 200°C to about 450°C,
**characterized in that**
as a binder:
- an aluminosilicate,
- water glass and
- water
are used, wherein the molar ratio of Al₂O₃ to SiO₂ in the binder is from about 1:2 to about 1:20, wherein the binder is composed of about 20 to about 80% by weight of water glass, about 20 to about 80% by weight water and about 1 to about 25% by weight aluminum silicate, each relative to the total weight of the binder.

16. Method according to claim 15,
**characterised in that**
the binder comprises additionally a complex alkali fluoride and/or phosphate.

17. Use of abrasive grain agglomerates according to one of claims 1 to 14 for the production of abrasive agents on substrates and bonded abrasive agents.

## Revendications

1. Des agglomérats de grains abrasifs composés d'une pluralité de grains abrasifs, où les grains abrasifs sont sélectionnés dans le groupe se composant de corindon, corindon fondu, corindon fritté, corindon de zirconium, carbure de silicium, carbure de bore, nitrure de bore cubique, diamant et/ou des mélanges de ceux-ci, liés ensemble avec un liant non organique,
**caractérisés en ce que**
la base pour le liant contient
- un aluminosilicate
- du verre soluble, et
- de l'eau, où le liant est composé d'environ 20 à environ 80% en poids de verre soluble, environ 20 à environ 80% en poids d'eau et environ 1 à environ 25% en poids d'aluminosilicate, chaque produit par rapport au poids total du liant
où le rapport molaire de Al₂O₃ à SiO₂ dans le liant est d'environ 1:2 à environ 1:20, où le liant est durcissable à une température ≤ 450°C.

2. Les agglomérats de grains abrasifs selon la revendication 1,
**caractérisés en ce que**
le liant contient en outre un complexe fluorure alcalin sélectionné dans le groupe se composant de Na₃AlF₆, K₂NaAlF₆, Na₂SiF₆, K₂SiF₆, NaBF₄ et KBF₄, où la partie en poids du fluorure alcalin est d'environ 1% en poids à environ 15% en poids par rapport au poids total du liant.

3. Les agglomérats de grains abrasifs selon la revendication 1,
**caractérisés en ce que**
le liant contient en outre un phosphate avec une partie en poids d'environ 20% en poids à environ 60% en poids par rapport au poids total du liant.

4. Les agglomérats de grains abrasifs selon l'une quelconque des revendications 1 à 3,
**caractérisés en ce que**
la partie du liant est d'environ 1 à environ 15% en poids par rapport aux grains abrasifs liés les uns aux autres.

5. Les agglomérats de grains abrasifs selon l'une quelconque des revendications 1 à 4,
**caractérisés en ce que**
le liant est durcissable à une température située entre 200°C et 400°C.

6. Les agglomérats de grains abrasifs selon l'une quelconque des revendications 1 à 5,
**caractérisés en ce que**
l'aluminosilicate est sélectionné dans le groupe se composant de métakaolin, cendres de combustion, scories en fusion, sables fins et argiles activés.

7. Les agglomérats de grains abrasifs selon l'une quelconque des revendications 1 à 6,
**caractérisés en ce que**
l'aluminosilicate est un réseau tridimensionnel de tétraèdres SiO₄ et AlO₄ générés par polycondensation à partir de Al₂O₃ et SiO₂ de réaction.

8. Les agglomérats de grains abrasifs selon l'une quelconque des revendications 3 à 7,
**caractérisés en ce que**
le réseau tridimensionnel comprend en outre des tétraèdres PO₄.

9. Les agglomérats de grains abrasifs selon l'une quelconque des revendications 1 à 8,
**caractérisés en ce que**
le liant contient en outre des matériaux de charge et/ou des agents abrasifs auxiliaires sélectionnés dans le groupe se composant de sulfures, phosphates, carbonates et/ou halogénure contenant des composés complexes du groupe se composant des éléments Na, Li, K, Mg, Ca, Al, Mn, Cu, Sn, Fe, Ti, Sb et/ou Zn.

10. Les agglomérats de grains abrasifs selon l'une quelconque des revendications 1 à 9,
**caractérisés en ce que**
le liant contient une partie d'environ 2% en poids à environ 15% en poids de grains fins sélectionnés dans le groupe se composant de corindon, corindon fondu, corindon fritté, corindon de zirconium, carbure de silicium, carbure de bore, nitrure de bore cubique et diamant et/ou des mélanges de ceux-ci en tant que matériau de charge, où les grains fins possèdent une taille de grain moyenne située entre environ 0,5 µm et environ 30 µm.

11. Les agglomérats de grains abrasifs selon l'une quelconque des revendications 1 à 10,
**caractérisés en ce que**
les grains abrasifs primaires possèdent une distribution de grains bimodale, où la différence en pourcentage entre les tailles de grain principales des maxima de distribution de grains se situe entre environ 30% et environ 70%.

12. Les agglomérats de grains abrasifs selon l'une quelconque des revendications 1 à 11,
**caractérisés en ce que**
la taille de grain moyenne des particules primaires se situe entre 30 µm et 200 µm et le diamètre moyen des agglomérats de grains abrasifs se situe entre 0,05 mm et 3 mm.

13. Les agglomérats de grains abrasifs selon l'une quelconque des revendications 1 à 12,
**caractérisés en ce que**
la porosité des agglomérats de grains abrasifs est d'environ 10% en volume à environ 50% en volume.

14. Les agglomérats de grains abrasifs selon l'une quelconque des revendications 1 à 13,
**caractérisés en ce que**
les agglomérats de grains abrasifs possèdent une résistance à la fracture (CFF) conformément à Vollstädt d'au moins 10 N, de préférence d'au moins 40 N.

15. Un procédé de production d'agglomérats de grains abrasifs composés d'une pluralité de grains abrasifs liés les uns aux autres par des liants non organiques, où les grains abrasifs sont sélectionnés dans le groupe se composant de corindon, corindon fondu, corindon fritté, corindon de zirconium, carbure de silicium, carbure de bore, nitrure de bore cubique et diamant et/ou des mélanges de ceux-ci, comprenant les opérations suivantes :
- le mélange des grains abrasifs avec un liant,
- le séchage des ébauches crues d'agglomérats de grains abrasifs ainsi obtenues à une température située entre 100°C et 150°C, et
- le durcissage des agglomérats de grains abrasifs séchés à une température d'environ 200°C à environ 450°C,
**caractérisé en ce que**
en tant que liant :
- un aluminosilicate,
- du verre soluble, et
- de l'eau
sont utilisés, où le rapport molaire de Al₂O₃ sur SiO₂ dans le liant est d'environ 1:2 à environ 1:20, où le liant est composé d'environ 20 à environ 80% en poids de verre soluble, d'environ 20 à environ 80% en poids d'eau et d'environ 1 à environ 25% en poids de silicate d'aluminium, chaque produit par rapport au poids total du liant.

16. Le procédé selon la revendication 15,
**caractérisé en ce que**
le liant contient en outre un complexe fluorure alcalin et/ou du phosphate.

17. L'utilisation d'agglomérats de grains abrasifs selon l'une quelconque des revendications 1 à 14 pour la production d'agents abrasifs sur des substrats et des agents abrasifs liés.
